# EUROPÄISCHE PATENTSCHRIFT

(11) **EP 2 164 371 B1**
(45) Veröffentlichungstag und Bekanntmachung des Hinweises auf die Patenterteilung: **12.01.2011**
(21) Anmeldenummer: 08759875.1
(22) Anmeldetag: 21.05.2008
(51) Int. Cl.: A47J 31/44, A47J 31/58

(54) **STECKELEMENT, SCHLAUCHKUPPLUNG UND SCHLAUCHKUPPLUNGSANORDNUNG, INSBESONDERE ZUR VERWENDUNG IN HEISSGETRÄNKEZUBEREITUNGSVORRICHTUNGEN**
PLUG-IN ELEMENT, HOSE COUPLING, AND HOSE COUPLING ARRANGEMENT, PARTICULARLY FOR USE IN DEVICES FOR PREPARING HOT BEVERAGES
ELEMENT EMBOÎTABLE, RACCORD POUR TUYAUX FLEXIBLES ET ENSEMBLE RACCORD POUR TUYAUX FLEXIBLES, DESTINES NOTAMMENT A ETRE UTILISES DANS DES DISPOSITIFS DE PREPARATION DE BOISSONS CHAUDES

(30) Priorität: 11.06.2007 DE 102007026848
(43) Veröffentlichungstag der Anmeldung: 24.03.2010
(73) Patentinhaber: BSH Bosch und Siemens Hausgeräte GmbH, 81739 München (DE)
(72) Erfinder: SCHNEIDERBAUER, Gottfried, 84553 Halsbach (DE)
(86) Internationale Anmeldenummer: PCT/EP2008/056274
(87) Internationale Veröffentlichungsnummer: WO 2008/151910

(56) Entgegenhaltungen:
- US-A1- 2002 134 248
- US-A1- 2005 139 080

## Beschreibung

Die Erfindung betrifft ein Steckelement, eine Schlauchkupplung und eine Schlauchkupplungsanordnung, insbesondere zur Verwendung in Heißgetränkezubereitungsvorrichtungen.

Im Stand der Technik werden Schlauchkupplungen zum dichten Verbinden zweier Schlauchenden einer wenigstens zwei Schläuche umfassenden, flüssigkeits- oder dampfführenden Schlauchleitung, mit einem an einem ersten Schlauchende angebrachten Steckelement und mit einer an einem zweiten Schlauchende angebrachten, das Steckelement aufnehmenden, im wesentlichen hohlzylindrisch ausgebildeten Aufnahme, verwendet.

Gattungsgemäße Schlauchkupplungen sind beispielsweise in der EP 1 538 384 und der DE 102 17 197 A1 offenbart. Diese Schlauchkupplungen werden insbesondere in Heißgetränkezubereitungsvorrichtungen verwendet, wie auch die in der US 2002/134248 A1 beschriebene Sicherheitsvorrichtung eines Dampfschäumgeräts zur Herstellung eines geschäumten Getränks.

Heißgetränkezubereitungsvorrichtungen, insbesondere Kaffeevollautomaten, sind Geräte, die nach der Heißgetränkeauswahl alle Bedienschritte vollautomatisch durchführen. Nach dem Drücken einer Bezugstaste wird das Getränkepulver in eine Brühkammer verbracht und dort mittels Heißwasser ausgelaugt.

Neben Heißwasser zum Brühen eines Heißgetränks werden von den Vollautomaten in der Regel auch Heißdampf zur Zubereitung von heißer Milch oder von heißem Milchschaum bereitgestellt. Der Milchschaum wird dabei von Milchschäumsystemen hergestellt, die im Stand der Technik unter Bezeichnungen wie Auto-Cappuccino, CappuccinoControl oder Cappuccinatore bekannt sind.

Gattungsgemäße Milchaufschäumsysteme umfassen ein Dampfrohr, das an einen Heißdampf- bzw. Heißwassergenerator einer Heißgetränkezubereitungsvorrichtung angeschlossen ist und das während des Betriebes von Heißdampf durchströmt wird.

Milch und/oder Luft sind ein über Ventil beimischbar, das über eine seitliche Einlassöffnung an das Dampfrohr des Milchschäumsystems angeschlossen ist.

Der Heißdampf verlässt, gegebenenfalls unter Beimischung von Milch oder von Milch und Luft, das Dampfrohr über eine Auslassdüse als Gemisch. Gegebenenfalls umfasst das Milchaufschäumsystem auch noch eine an den Heißdampf- bzw. Heißwassergenerator angeschlossene Heißwasserleitung zum Bezug von Heißwasser, beispielsweise zur Zubereitung von Tee.

Da die Milchschäumsysteme mit Milch in Berührung kommen müssen sie in regelmäßigen Abständen gereinigt werden. Vorzugsweise sind sie daher von der Vorrichtung abnehmbar ausgebildet, beispielsweise mittels lösbarer Schlauchkupplung.

Im Folgenden wird Rohr, Leitung oder Schlauchleitung als Synonym für flexible oder starre Rohre oder Leitungen verwendet.

Die Schlauchkupplung, umfassend ein Steckelement und eine Aufnahme, verbindet dabei einen ersten Teil einer Schlauchleitung, die vom Heißdampf- bzw. Heißwassergenerator in Richtung Frontseite des Heißgetränkezubereitungsvorrichtung führt mit einem zweiten Teil dieser Schlauchleitung, der vom Einlass des Milchschäumsystems in Richtung Auslassdüse des Systems führt.

Die beiden Teile der Schlauchleitung werden von einer Bedienperson dadurch verbunden, dass das an dem ersten Schlauchende angebrachte Steckelement in die an das Dampfrohr oder die Heißwasserleitung angebrachte, das Steckelement aufnehmende, im wesentlichen hohlzylindrisch ausgebildeten Aufnahme eingeführt wird.

Um das Milchschäumsystem mit der Aufnahme zur Aufnahme des Steckelements leicht abnehmen bzw. aufstecken sowie auch befestigen zu können, ist das Steckelement auf der Frontfläche einer Heißgetränkezubereitungsvorrichtung befestigt und ragt horizontal aus der Ebene heraus. Das Steckelement ist über den ersten Teil der Schlauchleitung mit dem Heißdampf- bzw. Heißwassergenerator verbunden und während des Betriebes, d.h. während des Bezuges von Heißdampf- bzw. Heißwasser druckbeaufschlagt.

Wird das Milchaufschäumsystem während des Betriebes von einer Bedienperson abgenommen, kann aus dem unter Heißdampf- oder Heißwasserdruck stehenden ersten Teil der Schlauchleitung über das Steckelement Heißdampf und/oder Heißwasser horizontal, d.h. in Richtung der Bedienperson strömen bzw. spritzen.

Im Stand der Technik sind hierzu insbesondere elektronische Sicherheitseinrichtungen bekannt; beispielsweise wird über einen Mikroschalter ein Ventil in der Schlauchleitung geschlossen, um ein unkontrolliertes Ausströmen von Heißwasser oder Heißdampf zu verhindern. Sollte die Elektronik in der Heißgetränkezubereitungsvorrichtung jedoch versagen, ist diese Sicherheitseinrichtung außer Betrieb und es besteht ein Sicherheitsrisiko für die Bedienperson.

Aufgabe der Erfindung ist es daher, eine zusätzliche Sicherheitseinrichtung für mit Heißdampf- oder Heißwasser druckbeaufschlagte Schlauchleitungen und Steckelemente, insbesondere zur Verwendung in Heißgetränkezubereitungsvorrichtungen, bereitzustellen. Eine weitere Aufgabe der Erfindung ist es, einen Kalkabscheider in Schlauchleitungen von Heißgetränkeautomaten bereitzustellen. Ein weiterer Aspekt der vorliegenden Erfindung ist zudem die Verwendung des erfindungsgemäßen Steckelements als Kalkabscheider.

Gelöst wird die Aufgabe durch ein Steckelement mit den Merkmalen des Anspruchs 1, durch eine Schlauchkupplung mit den Merkmalen des Anspruchs 3 sowie durch eine Schlauchkupplungsanordnung mit den Merkmalen des Anspruchs 4.

Demnach wird durch eine Prallwand ein lineares, d.h. horizontales Ausströmen von Heißwasser oder Heißdampf aus der Mündung eines mit heißwasser- oder heißdampfdruckbeaufschlagten Steckelements verhindert. Vielmehr wird ein Heißdampfstrom diffus verwirbelt und ein Heißwasserstrom, vorzugsweise nach unten, in Richtung der Tropfschale einer Heißgetränkezubereitungsvorrichtung abgelenkt.

Die Ablenkung wird erfindungsgemäß dadurch erreicht, dass die Prallwand um eine in der Verlängerung des Steckerschaftmantels ausgebildete, teilumfängliche Abdeckung ergänzt ist. Je nach Anordnung und Radius der teilumfänglichen Abdeckung ist jeder Ablenkungswinkel und jedes Stromvolumen einstellbar.

Gemäß der vorliegenden Erfndung ist die Prallwand als Trennsteg im Schaft des Steckelements ausgebildet, dergestalt, dass der Steckerschaftmantel vor und hinter dem Trennsteg zwei Ausnehmungen aufweist. Die Ablenkung, vorzugsweise in Richtung der Tropfschale, wird in dieser Ausführungsform erfindungsgemäß dadurch erreicht, dass sich zumindest die Ausnehmung vor der als Trennsteg ausgebildeten Prallwand in der unteren Hälfte des Steckerschaftmantels befindet. Je nach Anordnung und Radius der Ausnehmung ist jeder Ablenkungswinkel und jedes Stromvolumen einstellbar.

Überraschenderweise zeigte sich, dass ein nach dieser technischen Lehre ausgebildetes Steckelement nicht nur als Sicherheitseinrichtung sondern auch als Kalkabscheider dient.

Insbesondere im zweiten Teil der Schlauchleitung die vom Einlass des Milchschaumsystems in Richtung Auslassdüse führt, ist der Leitungsquerschnitt gegenüber dem ersten Teil der Schlauchleitung verjüngt um einen Venturi-Effekt in dem Milchschäumsystem zum Schäumen von Milch zu erzeugen. Ist aber die Verjüngung einer Schlauchleitung erst an einem Endabschnitt der Leitung ausgeführt, so besteht immer die Gefahr, dass Kalkstücke aus dem Heißdampf- bzw. Heißwassergenerator bis zu der Verjüngung mitgeführt werden und dann insbesondere den Heißdampfdurchfluss in dem Milchschäumsystem abrupt unterbrechen.

Erfindungsgemäß stoßen im Heißdampf oder Heißwasser mitgeführte Kalkpartikel während des Betriebes des Milchschäumsystems an die im Steckelement ausgebildete Prallwand um schließlich in der hohlzylindrischen Aufnahme zum liegen zu kommen. Der Heißdampf oder das Heißwasser hingegen umströmt die Prallwand.

Wird schließlich das Milchschäumsystem mittels der lösbaren Schlauchkupplung zu Reinigungszwecken abgenommen, dann werden dabei auch die Kalkpartikel entsorgt, die sich in der Aufnahme angesammelt haben.

Anhand von bevorzugten, in den Figuren veranschaulichten Ausführungsbeispielen, wird im Folgenden die Erfindung näher erläutert. Dabei zeigen:
- Fig. 1: die Frontseite einer Heißgetränkezubereitungsvorrichtung, hier eines Kaf- feevollautomaten
- Fig. 2: einen Axialschnitt eines nicht erfindungsgemäßen Steckelements
- Fig. 3: einen Axialschnitt einer nicht erfindungsgemäßen Schlauchkupplung
- Fig. 4: einen Axialschnitt einer Ausführungsform eines erfindungsgemä- ßen Steckelements
- Fig. 5: einen Axialschnitt einer Ausführungsform einer erfindungsgemä- ßen Schlauchkupplung

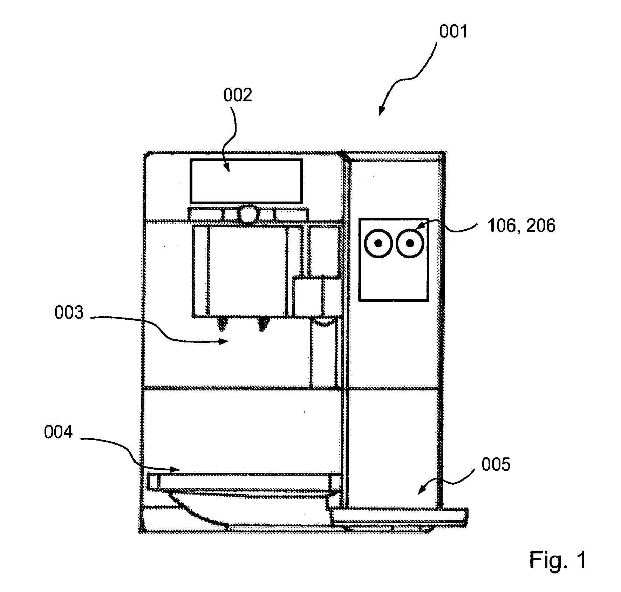

Fig. 1 zeigt die Frontseite 001 eines Kaffeevollautomaten mit einem Display 002, einem Kaffeeauslauf 003 und Abstellflächen 004 und 005 für Becher oder Gläser zur Aufnahme von Kaffee, Heißwasser, heißer Milch oder Milchschaum. Kaffee wird dabei über den Kaffeeauslauf 003 bezogen; Heißwasser, heiße Milch und Milchschaum werden über ein Milchschäumsystem nicht abgebildet bezogen, das auf die aus der Ebene der Frontseite 001 im wesentlichen horizontal herausragenden Steckelemente 106 und 206 aufgesteckt wird.

Die Steckelemente 106 und 206 sind mit einer flüssigkeits- oder dampfführenden Schlauchleitung (nicht abgebildet), verbunden. Die Schlauchleitungen führen von einem Heißdampf- bzw. Heißwassergenerator, gegebenenfalls über ein Mehrwegeventil, in Richtung Frontseite 001 des Heißgetränkeautomaten.

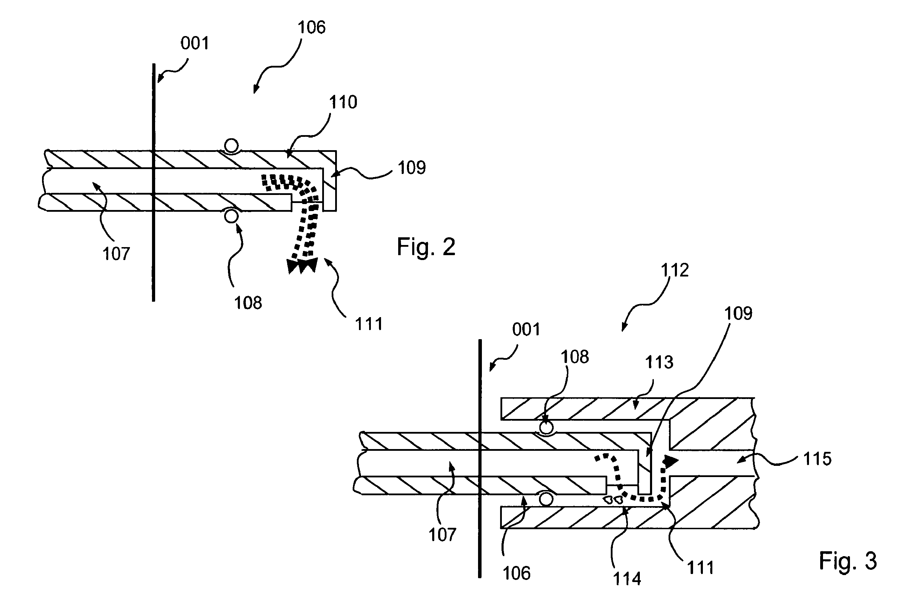

Fig. 2 zeigt einen Axialschnitt eines nicht erfindungsgemäßen Steckelements 106 mit einer Heißdampf- oder Heißwasserleitung 107, einem Dichtelement 108 in Form eines O-Rings, einer Prallwand 109 und einer in der Verlängerung des Steckerschaftmantels ausgebildeten, teilumfänglichen Abdeckung 110. Das Steckelement ragt im Wesentlichen horizontal aus der Ebene der Frontseite 001 des Kaffeevollautomaten heraus.

Durch die gestrichelten Pfeile 111 wird die Strömungsrichtung des Heißwassers oder des Heißdampfs in einem mit Heißdampf oder Heißwasser druckbeaufschlagten Steckelement symbolisiert. Ein Heißdampfstrom wird dabei diffus verwirbelt und ein Heißwasserstrom, vorzugsweise nach unten, in Richtung der Abstellfläche 005 des Kaffeevollautomaten, abgelenkt, so dass eine Bedienperson nicht durch heißes Wasser oder heißen Dampf gefährdet wird.

Fig. 3 zeigt einen Axialschnitt einer nicht erfindungsgemäßen Schlauchkupplung 112, umfassend ein Steckelement 106 und eine an einem zweiten Schlauchende angebrachte, das Steckelement 106 aufnehmende, im Wesentlichen hohlzylindrisch ausgebildete Aufnahme 113.

Zum Verbinden der beiden Schlauchleitungsenden 107 und 115 wird das Steckelement 106 in die Aufnahme 113 eingeführt, wodurch eine dichte und lösbare Verbindung geschaffen wird, die gleichzeitig als Halterung des mit der Aufnahme 113 vorzugsweise integral ausgebildeten Milchschäumsystems dient.

Das ringförmig ausgebildete Dichtelement 108 wird von der Aufnahme 113 dicht anliegend eingeschlossen. Der gestrichelte Pfeil 111 symbolisiert die Strömungsrichtung von Heißwasser oder Heißdampf, im eingekuppelten bzw. aufgesteckten Zustand. Das Heißwasser oder der Heißdampf umströmt dabei die Prallwand 109, um über die Mündung der Aufnahme 113 und der Schlauchleitung 115 in Richtung Auslassdüse des Milchschäumsystems zu strömen.

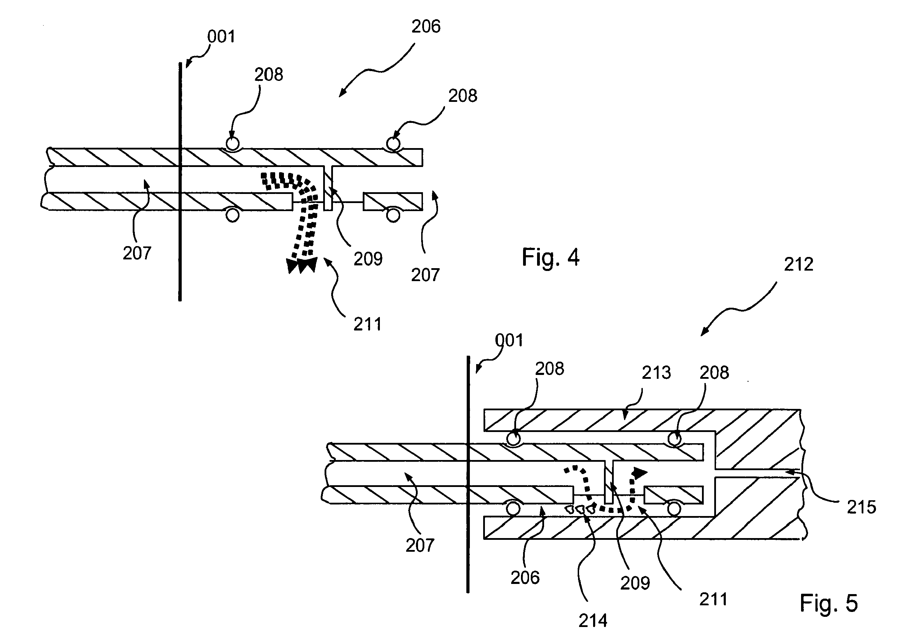

Fig. 4 zeigt einen Axialschnitt einer Ausführungsform eines erfindungsgemäßen Steckelements 206 mit einer Heißdampf- oder Heißwasserleitung 207, Dichtelementen 208 und einer Prallwand 209. Die Prallwand 209 ist als Trennsteg im Schaft des Steckelements ausgebildet, dergestalt, dass der Steckerschaftmantel vor und hinter dem Trennsteg zwei Ausnehmungen aufweist. Das Steckelement 206 ragt im Wesentlichen horizontal aus der Ebene der Frontseite 001 des Kaffeevollautomaten heraus. Ist die Heißdampf- oder Heißwasserleitung 207, ohne dass das Milchschäumsystem aufgesteckt ist, mangels Funktionsfähigkeit beispielsweise einer elektrischen Sicherheitseinrichtung druckbeaufschlagt, so stößt ein Heißdampfstrom oder ein Heißwasserstrom gegen die Prallwand 209. Ein Heißdampfstrom wird dabei diffus verwirbelt und ein Heißwasserstrom, vorzugsweise nach unten, in Richtung der Abstellfläche 005 des Kaffeevollautomaten, abgelenkt, so dass eine Bedienperson nicht durch heißes Wasser oder heißen Dampf gefährdet wird.

Fig. 5 zeigt einen Axialschnitt einer Ausführungsform einer erfindungsgemäßen Schlauchkupplung 212, umfassend eine zweite Ausführungsform eines erfindungsgemäßen Steckelements 206 und eine an einem zweiten Schlauchende angebrachte, das Steckelement 206 aufnehmenden, im Wesentlichen hohlzylindrisch ausgebildeten Aufnahme 213. Zum Verbinden der beiden Schlauchleitungsenden wird das Steckelement 206 in die Aufnahme 213 eingeführt, wodurch eine dichte und lösbare Verbindung geschaffen wird, die auch als Halterung des mit der Aufnahme 213 vorzugsweise integral ausgebildeten Milchschäumsystems dient. Die ringförmig ausgebildeten Dichtelemente /208/werden von der Aufnahme 213 dicht anliegend eingeschlossen.

Der gestrichelte Pfeil 211 symbolisiert die Strömungsrichtung von Heißwasser oder Heißdampf im eingekuppelten bzw. aufgesteckten Zustand.

Die Prallwand 109 bzw. die als Trennsteg ausgebildete Prallwand 209 dient erfindungsgemäß auch als Kalkabscheider, indem, wie in den Fig. 3 und 5 geneigt, mitgeführte Kalkpartikel 114 und 214 am Boden der Aufnahme 112 und 212 zum liegen kommen. Wird schließlich das Milchschäumsystem zu Reinigungszwecken abgenommen, dann werden dabei auch Kalkpartikel entsorgt, die sich in der Aufnahme angesammelten haben.

Durch die erfindungsgemäßen Schlauchkupplung 212 wird vermieden, dass Kalkpartikel aus dem Heißdampf- bzw. Heißwassergenerator über den ersten Teil der Heißdampf- oder Heißwasserleitung 207 bis zu dem verjüngten zweiten Teil insbesondere der Heißdampfleitung 215 vordringen und diesen abrupt verstopfen.

Eine erfindungsgemäße Schlauchkupplungsanordnung wird vorzugsweise in einer Heißgetränkezubereitungsvorrichtung, insbesondere in einem Kaffeevollautomaten verwendet. In dieser bevorzugten Ausführungsform der Schlauchkupplungsanordnung ragen zumindest zwei Steckelemente im Wesentlichen horizontal aus der Ebene der Frontseite eines Kaffeevollautomaten heraus. Zumindest ein Steckelement ist mit Heißdampf oder zumindest ein zweites Steckelement mit Heißwasser während des Betriebes eines aufgesteckten Milchschäumsystems druckbeaufschlagt.

Ein Milchschäumsystem mit zumindest einer Schlauchleitungen für Heißdampf und zumindest einer Schlauchleitung für Heißwasser weist an einem Ende jeder Schlauchleitung eine hohlzylindrische Aufnahmen zur Aufnahme eines Steckelements auf.

Die Aufnahmen und Steckelemente sind im eingekoppelten bzw. aufgesteckten Zustand dergestalt wirkverbunden, dass eine dichte, lösbare, das Milchschäumsystem tragende Verbindung gebildet wird.

Eine besonders bevorzugte Ausführungsform einer erfindungsgemäßen Schlauchkupplungsanordnung weist ein Steckelement mit einer Prallwand und einer in der Verlängerung des Steckerschaftmantels ausgebildeten, teilumfänglichen Abdeckung und ein Steckelement mit einer Prallwand, die als Trennsteg im Schaft des Steckelements ausgebildet ist, dergestalt, dass der Steckerschaftmantel vor und hinter dem Trennsteg zwei Ausnehmungen aufweist, sowie zwei die Steckelemente aufnehmende, im wesentlichen hohlzylindrisch ausgebildeten Aufnahmen auf.

Im aufgesteckten und eingekuppelten Zustand gewährleistet eine erfindungsgemäße Schlauchkupplungsanordnung mit zumindest zwei im wesentlichen horizontal aus der Ebene der Frontseite eines Kaffeevollautomaten herausragenden Steckelementen und zumindest zwei im wesentlichen hohlzylindrisch ausgebildeten Aufnahmen, die integral mit einem Milchschäumsystem ausgebildet sind, eine zuverlässige Verbindung von zumindest vier Schlauchleitungsenden und eine Halterung eines Milchschäumsystems an der Frontfläche eines Kaffeevollautomaten.

### Bezugszeichenliste

- 001: Frontseite eines Kaffeevollautomaten.
- 002: Display
- 003: Kaffeeauslauf
- 004, 005: Abstellfläche für Becher oder Gläser
- 106, 206: Steckelement
- 107, 207: erster Teil einer Heißdampf- oder Heißwasserleitung
- 108, 208: Dichtelement
- 109, 209: Prallwand
- 110: teilumfängliche Abdeckung in der Verlängerung des Steckerschaftmantels
- 111, 211: Strömungsrichtung des Heißwassers oder des Heißdampfs
- 112, 212: Schlauchkupplung
- 113,213: Aufnahme
- 114, 214: Kalkstücke
- 115, 215: zweiter Teil Heißdampf- oder Heißwasserleitung

## Patentansprüche

1. Steckelement (206) zur Herstellung einer dichten und lösbaren Schlauchkupplung (212) zum Verbinden von flüssigkeits- oder dampfführenden Schlauchteitungen mit einem Steckerschaft und zumindest einem Dichtelement (208), wobei eine Prallwand (209) ein lineares Ausströmen von Heißwasser oder Heißdampf aus der Mündung eines mit heißwasser- oder heißdampfdruckbeaufschlagten Steckelements verhindert, **dadurch gekennzeichnet, dass** die Prallwand (209) als Trennsteg im Schaft des Steckelements ausgebildet ist, dergestalt, dass der Steckerschaftmantel vor und hinter dem Trennsteg zwei Ausnehmungen aufweist.

2. Steckelement nach Anspruch 1, **dadurch gekennzeichnet, dass** die Prallwand (209) um eine in der Verlängerung des Steckerschaftmantels ausgebildete, teilumfängliche Abdeckung ergänzt ist.

3. Schlauchkupplung (212) zum dichten Verbinden zweier Schlauchenden einer wenigstens zwei Schläuche umfassenden, flüssigkeits- oder dampfführenden Schlauchleitung, mit einem an einem ersten Schlauchende angebrachten Steckelement (206) und mit einer an einem zweiten Schlauchende angebrachten, das Steckelement aufnehmenden, im wesentlichen hohlzylindrisch ausgebildeten Aufnahme (213), **gekennzeichnet durch** ein Steckelement (206) gemäß Anspruch 1 oder 2.

4. Schlauchkupplungsanordnung mit zumindest zwei im wesentlichen horizontal aus der Ebene der Frontseite eines Kaffeevollautomaten herausragenden Steckelementen (206) und zumindest zwei im wesentlichen hohlzylindrisch ausgebildeten Aufnahmen (213), die integral mit einem Milchschäumsystem ausgebildet sind, **gekennzeichnet durch** zumindest zwei Steckelemente (206) gemäß Anspruch 1 oder 2.

## Claims

1. Plug element (206) for producing a sealed and detachable hose coupling (212) for connection of liquid-conducting or steam-conducting hose ducts with a plug shank and at least one sealing element (208), wherein a baffle wall (209) prevents linear outflow of hot water or hot steam from the opening of a plug element pressurably loaded by hot water or hot steam, **characterised in that** the baffle wall (209) is so constructed as a separating web in the shank of the plug element that the plug shank circumference has two recesses in front of and behind the separating web.

2. Plug element according to claim 1, **characterised in that** the baffle wall (209) is supplemented by a partially circumferential cover constructed in prolongation of the plug shank circumference.

3. Hose coupling (212) for sealed connection of two hose ends of a liquid-conducting or steam-conducting hose duct comprising at least two hoses, with a plug element (206) mounted at a first hose end and with a receptacle (213) of substantially hollow-cylindrical construction mounted at a second hose end and receiving the plug element, **characterised by** a plug element (206) according to claim 1 or 2.

4. Hose coupling arrangement with at least two plug elements (206) projecting horizontally out of the plane of the front side of a coffee machine and at least two receptacles (213) of substantially hollow-cylindrical construction which are constructed integrally with a milk frothing system, **characterised by** at least two plug elements (206) according to claim 1 or 2.

## Revendications

1. Elément emboîtable (206) permettant d'obtenir un raccord pour tuyaux flexibles (212), étanche et amovible, destiné à raccorder des conduites de tuyaux flexibles transportant du liquide ou de la vapeur, comprenant une tige d'emboîtage et au moins un élément d'étanchéité (208), un déflecteur (209) empêchant un écoulement linéaire d'eau chaude ou de vapeur chaude hors de l'orifice d'un élément emboîtable alimenté sous pression en eau chaude ou en vapeur chaude, **caractérisé en ce que** le déflecteur (209) est réalisé en tant que nervure de séparation dans la tige de l'élément emboîtable, de telle manière que l'enveloppe de la tige de l'élément emboîtable présente deux évidements, devant et derrière la nervure de séparation.

2. Elément emboîtable selon la revendication 1, **caractérisé en ce que** le déflecteur (209) est complété par un recouvrement en partie circonférentiel, réalisé dans le prolongement de l'enveloppe de la tige de l'élément emboîtable.

3. Raccord pour tuyaux flexibles (212) destiné au raccordement étanche de deux extrémités de tuyau flexible d'une conduite de tuyaux flexibles transportant du liquide ou de la vapeur et contenant au moins deux tuyaux flexibles, comprenant un élément emboîtable (206) installé sur une première extrémité de tuyau et comprenant un logement (213) réalisé de manière essentiellement cylindrique creuse, logeant l'élément emboîtable et installé sur une seconde extrémité de tuyau, **caractérisé par** un élément emboîtable (206) selon la revendication 1 ou 2.

4. Agencement de raccord pour tuyaux flexibles comprenant au moins deux éléments emboîtables (206) dépassant essentiellement horizontalement du plan de la face avant d'une machine à café intégrée, et au moins deux logements (213) réalisés de manière essentiellement cylindrique creuse, qui sont réalisés de manière intégrale à un système de mousse de lait, **caractérisé par** au moins deux éléments emboîtables (206) selon la revendication 1 ou 2.
